# EUROPEAN PATENT APPLICATION

(11) **EP 4 592 920 A1**
(43) Date of publication of application: **30.07.2025**
(21) Application number: 25154730.3
(22) Date of filing: 29.01.2025
(51) Int. Cl.: G06Q 10/0639, G06Q 30/018, G06Q 50/04

(54) **SYSTEMS AND METHODS FOR A UNIFIED NETWORK INFRASTUCTURE**

(30) Priority: 29.01.2024 US 202418425787
(71) Applicant: Eqogo, PBC, Santa Barbara, CA 93103 (US)
(72) Inventor: GOERNER, Mark, Santa Barbara, CA 93103 (US)
(74) Representative: Boult Wade Tennant LLP

(57) **Abstract**

Disclosed are systems and methods that provide a real-time, decision-intelligence (DI)-based, computerized framework that dynamically and automatically evaluates and hosts information related to items on network resources, such that the accessibility, as well as electronic display of the items on graphical user interfaces (GUIs) of such network resources, are based on, and contingent upon the current, real-time evaluation of the items. The framework can employ current artificial intelligence / machine learning (AI/ML) and/or large language model (LLM) techniques to computationally determine and prioritize certification compliance, material quality, item popularity, and the like, or some combination thereof. The framework's disclosed capabilities and functionality provide a novel paradigm in online commerce (e.g., e-commerce), promoting responsible and sustainable consumption through a curated marketplace, which can impact how the items are displayed, as well as their availability to certain users/markets.

## Description

### FIELD OF THE DISCLOSURE

The present disclosure is generally related to a unified network content hosting infrastructure and/or platform, and more particularly, to a decision intelligence (DI)-based computerized framework for deterministically generating, managing, controlling and hosting electronic content related to real-world and digital items on a computer network.

### SUMMARY OF THE DISCLOSURE

According to some embodiments, the disclosed systems and methods provide a novel computerized framework that dynamically and automatically evaluates and hosts information related to items (e.g., products, which can be real-world and/or digital items, whether consumer and/or commercial products, for example), which can have associated information hosted and/or uploaded on network resources (e.g., websites, portals and/or any other type of network-based, online marketplace), such that the accessibility, as well as electronic display of the items on graphical user interfaces (GUIs) of such network resources, are based on, and contingent upon the current, real-time evaluation of the items. By way of example, such products can involve products for sale, goods and/or assets, as well as raw materials related to such products, goods and/or assets (e.g., wiring, brass, copper, and the like, for example).

According to some embodiments, the disclosed framework can employ current artificial intelligence / machine learning (AI/ML) and/or large language model (LLM) techniques to computationally determine and prioritize certification compliance, material quality, warranty type, warranty duration, item popularity, and the like, or some combination thereof. In some embodiments, through meticulous computerized scrutiny, via the deployed and executed AI/ML and/or LLM techniques, as discussed herein, items can be assessed against certification standards, ensuring regulatory compliance. In some embodiments, material evaluations can focus on, but not be limited to, sustainability and quality, promoting eco-friendly and durable choices. Moreover, in some embodiments, real-time analysis of market trends and customer reviews can lend towards popularity and/or contextual relevance of such items, which can be integrated into the evaluation of such items for an online marketplaces.

As provided for via the framework's disclosed capabilities and functionality, the disclosed systems and methods provide a novel paradigm in online commerce (e.g., e-commerce), promoting responsible and sustainable consumption through a curated marketplace.

According to some embodiments, a method is disclosed for a DI-based computerized framework for deterministically generating, managing, controlling and hosting electronic content related to real-world and digital items on a computer network. In accordance with some embodiments, the present disclosure provides a non-transitory computer-readable storage medium for carrying out the above-mentioned technical steps of the framework's functionality. The non-transitory computer-readable storage medium has tangibly stored thereon, or tangibly encoded thereon, computer readable instructions that when executed by a device cause at least one processor to perform a method for deterministically generating, managing, controlling and hosting electronic content related to real-world and digital items on a computer network.

In accordance with one or more embodiments, a system is provided that includes one or more processors and/or computing devices configured to provide functionality in accordance with such embodiments. In accordance with one or more embodiments, functionality is embodied in steps of a method performed by at least one computing device. In accordance with one or more embodiments, program code (or program logic) executed by a processor(s) of a computing device to implement functionality in accordance with one or more such embodiments is embodied in, by and/or on a non-transitory computer-readable medium.

### DESCRIPTIONS OF THE DRAWINGS

The features, and advantages of the disclosure will be apparent from the following description of embodiments as illustrated in the accompanying drawings, in which reference characters refer to the same parts throughout the various views. The drawings are not necessarily to scale, emphasis instead being placed upon illustrating principles of the disclosure:
FIG. 1 is a block diagram of an example configuration within which the systems and methods disclosed herein could be implemented according to some embodiments of the present disclosure;
FIG. 2 is a block diagram illustrating components of an exemplary system according to some embodiments of the present disclosure;
FIG. 3 illustrates an exemplary workflow according to some embodiments of the present disclosure;
FIG. 4 depicts an exemplary implementation of an architecture according to some embodiments of the present disclosure;
FIG. 5 depicts an exemplary implementation of an architecture according to some embodiments of the present disclosure; and
FIG. 6 is a block diagram illustrating a computing device showing an example of a client or server device used in various embodiments of the present disclosure.

### DETAILED DESCRIPTION

The present disclosure will now be described more fully hereinafter with reference to the accompanying drawings, which form a part hereof, and which show, by way of non-limiting illustration, certain example embodiments. Subject matter may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of example embodiments in whole or in part.

In general, terminology may be understood at least in part from usage in context. For example, terms, such as "and", "or", or "and/or," as used herein may include a variety of meanings that may depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein, depending at least in part upon context, may be used to describe any feature, structure, or characteristic in a singular sense or may be used to describe combinations of features, structures or characteristics in a plural sense. Similarly, terms, such as "a," "an," or "the" again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

The present disclosure is described below with reference to block diagrams and operational illustrations of methods and devices. It is understood that each block of the block diagrams or operational illustrations, and combinations of blocks in the block diagrams or operational illustrations, can be implemented by means of analog or digital hardware and computer program instructions. These computer program instructions can be provided to a processor of a general purpose computer to alter its function as detailed herein, a special purpose computer, ASIC, or other programmable data processing apparatus, such that the instructions, which execute via the processor of the computer or other programmable data processing apparatus, implement the functions/acts specified in the block diagrams or operational block or blocks. In some alternate implementations, the functions/acts noted in the blocks can occur out of the order noted in the operational illustrations. For example, two blocks shown in succession can in fact be executed substantially concurrently or the blocks can sometimes be executed in the reverse order, depending upon the functionality/acts involved.

For the purposes of this disclosure a non-transitory computer readable medium (or computer-readable storage medium/media) stores computer data, which data can include computer program code (or computer-executable instructions) that is executable by a computer, in machine readable form. By way of example, and not limitation, a computer readable medium may include computer readable storage media, for tangible or fixed storage of data, or communication media for transient interpretation of code-containing signals. Computer readable storage media, as used herein, refers to physical or tangible storage (as opposed to signals) and includes without limitation volatile and non-volatile, removable and non-removable media implemented in any method or technology for the tangible storage of information such as computer-readable instructions, data structures, program modules or other data. Computer readable storage media includes, but is not limited to, RAM, ROM, EPROM, EEPROM, flash memory or other solid state memory technology, optical storage, cloud storage, magnetic storage devices, or any other physical or material medium which can be used to tangibly store the desired information or data or instructions and which can be accessed by a computer or processor.

For the purposes of this disclosure the term "server" should be understood to refer to a service point which provides processing, database, and communication facilities. By way of example, and not limitation, the term "server" can refer to a single, physical processor with associated communications and data storage and database facilities, or it can refer to a networked or clustered complex of processors and associated network and storage devices, as well as operating software and one or more database systems and application software that support the services provided by the server. Cloud servers are examples.

For the purposes of this disclosure, a "network" should be understood to refer to a network that may couple devices so that communications may be exchanged, such as between a server and a client device or other types of devices, including between wireless devices coupled via a wireless network, for example. A network may also include mass storage, such as network attached storage (NAS), a storage area network (SAN), a content delivery network (CDN) or other forms of computer or machine-readable media, for example. A network may include the Internet, one or more local area networks (LANs), one or more wide area networks (WANs), wire-line type connections, wireless type connections, cellular or any combination thereof. Likewise, sub-networks, which may employ different architectures or may be compliant or compatible with different protocols, may interoperate within a larger network.

For purposes of this disclosure, a "wireless network" should be understood to couple client devices with a network. A wireless network may employ stand-alone ad-hoc networks, mesh networks, Wireless LAN (WLAN) networks, cellular networks, or the like. A wireless network may further employ a plurality of network access technologies, including Wi-Fi, Long Term Evolution (LTE), WLAN, Wireless Router mesh, or 2nd, 3rd, 4^{th} or 5^{th} generation (2G, 3G, 4G or 5G) cellular technology, mobile edge computing (MEC), Bluetooth, 802.11b/g/n, or the like. Network access technologies may enable wide area coverage for devices, such as client devices with varying degrees of mobility, for example.

In short, a wireless network may include virtually any type of wireless communication mechanism by which signals may be communicated between devices, such as a client device or a computing device, between or within a network, or the like.

A computing device may be capable of sending or receiving signals, such as via a wired or wireless network, or may be capable of processing or storing signals, such as in memory as physical memory states, and may, therefore, operate as a server. Thus, devices capable of operating as a server may include, as examples, dedicated rack-mounted servers, desktop computers, laptop computers, set top boxes, integrated devices combining various features, such as two or more features of the foregoing devices, or the like.

For purposes of this disclosure, a client (or user, entity, subscriber or customer) device may include a computing device capable of sending or receiving signals, such as via a wired or a wireless network. A client device may, for example, include a desktop computer or a portable device, such as a cellular telephone, a smart phone, a display pager, a radio frequency (RF) device, an infrared (IR) device a Near Field Communication (NFC) device, a Personal Digital Assistant (PDA), a handheld computer, a tablet computer, a phablet, a laptop computer, a head set, a set top box, a wearable computer, smart watch, an integrated or distributed device combining various features, such as features of the forgoing devices, or the like. Such client devices, as discussed herein can include any type of known or to be known functionality for displaying and/or rendering product related content within a displayable page, which can include, but is not limited to, a user interface (UI) that can display two-dimensional (2D), three dimensional (3D), augmented reality (AR), virtual reality (VR), extended reality (XR), and the like, or some combination thereof.

A client device may vary in terms of capabilities or features. Claimed subject matter is intended to cover a wide range of potential variations, such as a web-enabled client device or previously mentioned devices may include a high-resolution screen (HD or 4K for example), one or more physical or virtual keyboards, mass storage, one or more accelerometers, one or more gyroscopes, global positioning system (GPS) or other location-identifying type capability, or a display with a high degree of functionality, such as a touch-sensitive color 2D or 3D display, for example.

Certain embodiments and principles will be discussed in more detail with reference to the figures. According to some embodiments, the disclosed systems and methods provide a cutting-edge computer framework configured to revolutionize online product evaluation, hosting and purchasing. The disclosed framework employs a multi-faceted approach to assess products, emphasizing certification requirements, materials, popularity, and the like.

According to some embodiments, the disclosed framework can audit, via any type of known or to be known AI/ML and/or LLM technique, algorithm or mechanism, products against established certification standards, ensuring they meet regulatory and quality benchmarks. As discussed below, this guarantees that only certified and compliant items are showcased on the platform, instilling confidence in consumers.

According to some embodiments, the framework can evaluate the materials used in each product, emphasizing sustainability, durability (e.g., via longevity modelling, for example) and environmental impact, *inter alia.* By way of example, in some embodiments, by prioritizing eco-friendly and high-quality materials, the framework can promote responsible consumer choices while contributing to a more sustainable marketplace. This dual-focus on certification and materials sets a new standard for product assessment, aligning with contemporary consumer values.

Moreover, in some embodiments, the framework can implement intelligent algorithms that consider the popularity of products in real-time. For example, by analyzing information related to current trends, customer reviews and market demand, among other factors, the framework can dynamically determine, select and/or promote products that resonate with consumers. This ensures that the displayed items are not only compliant and well-constructed but also align with current market preferences.

According to some embodiments, as provided below, once the evaluation process is complete, the framework can integrate the products into its online marketplace, providing a user-friendly interface for users to explore and make informed decisions. In some embodiments, for example, product listings can be displayed based on the comprehensive evaluation criteria, allowing users to easily identify items that meet their specific preferences and values.

Accordingly, the disclosed framework provides novel capabilities for product hosting in e-commerce platforms, where certification adherence, material quality and popularity can converge and be leveraged to create a curated marketplace. By hosting a diverse array of products that excel in these criteria, the framework empowers users to make informed choices while promoting responsible and sustainable consumption in the digital age. Indeed, as discussed below, the framework can function as a standalone application program interface (API) associated with and/or provided via a dedicated network resource, and/or can be incorporated via another resource (e.g., platform or application) that can implement the disclosed functionality as part of a suite of network and/or computer-based operations.

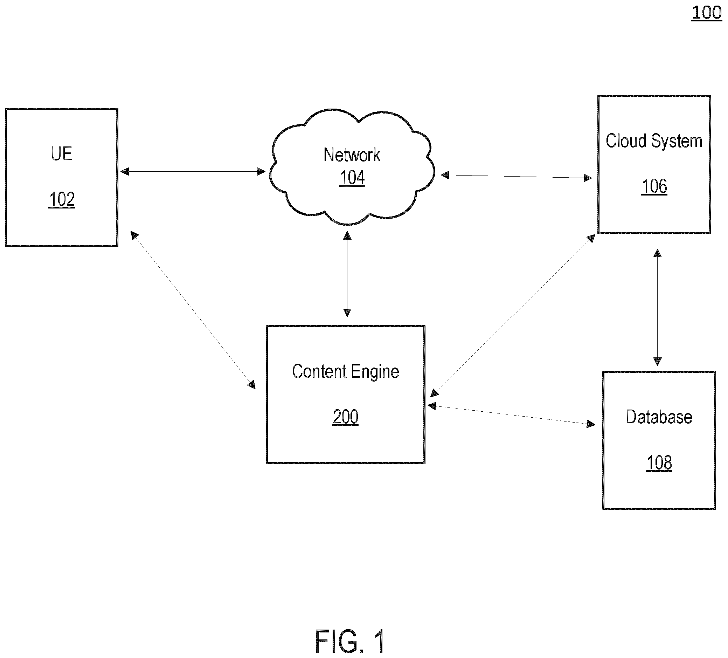

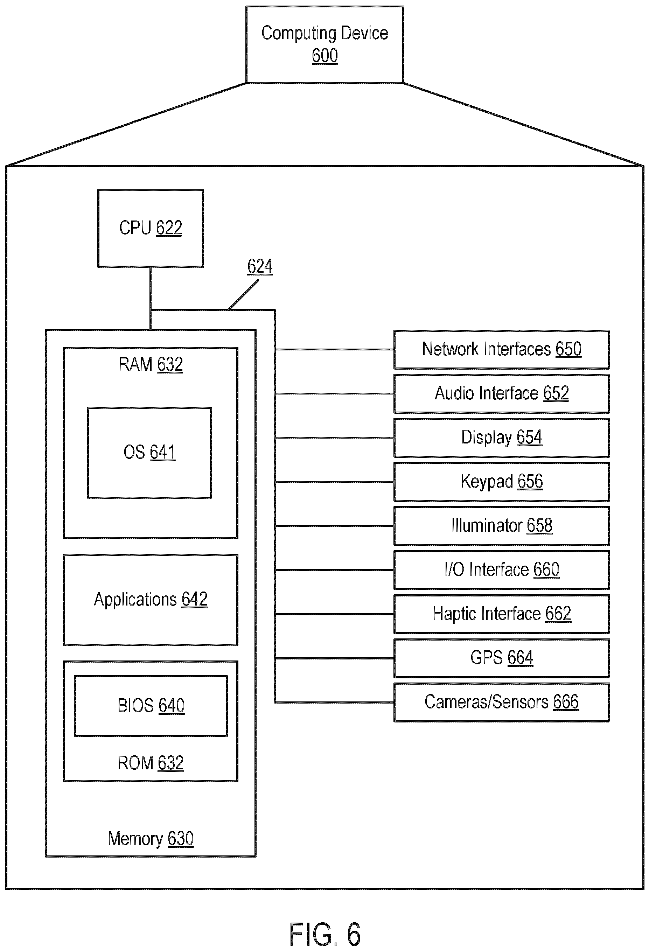

With reference to FIG. 1, system 100 is depicted which includes user equipment (UE) 102 (e.g., a client device, as mentioned above and discussed below in relation to FIG. 6), network 104, cloud system 106, database 108, and content engine 200. It should be understood that while system 100 is depicted as including such components, it should not be construed as limiting, as one of ordinary skill in the art would readily understand that varying numbers of UEs, cloud systems, databases, network resources, engines and networks can be utilized; however, for purposes of explanation, system 100 is discussed in relation to the example depiction in FIG. 1.

According to some embodiments, UE 102 can be any type of device, such as, but not limited to, a mobile phone, tablet, laptop, Internet of Things (IoT) device, head set (e.g., AR/VR head set, for example) autonomous machine, and any other device equipped with a cellular or wireless or wired transceiver. For example, UE 102 can be associated with a device on network 104, which can be a user device (e.g., smartphone) and/or a service or content provider server that hosts and/or provides content related to products, services and/or other items that can be purchased via a network platform and/or portal.

In some embodiments, a peripheral device (not shown) can be connected to UE 102, and can be any type of peripheral device, such as, but not limited to, a wearable device (e.g., smart watch), printer, speaker, and the like. In some embodiments, a peripheral device can be any type of device that is connectable to UE 102 via any type of known or to be known pairing mechanism, including, but not limited to, WiFi, Bluetooth^{™}, Bluetooth Low Energy (BLE), NFC, and the like.

In some embodiments, network 104 can be any type of network, such as, but not limited to, a wireless network, cellular network, the Internet, and the like (as discussed above). Network 104 facilitates connectivity of the components of system 100, as illustrated in FIG. 1.

According to some embodiments, cloud system 106 may be any type of cloud operating platform and/or network based system upon which applications, operations, and/or other forms of network resources may be located. For example, system 106 may be a service provider and/or network provider from where services and/or applications may be accessed, sourced or executed from. For example, system 106 can represent the cloud-based architecture associated with a network platform, which has associated network resources hosted on the internet or private network (e.g., network 104), which enables (via engine 200) the content curation and management discussed herein.

In some embodiments, cloud system 106 may include a server(s) and/or a database of information which is accessible over network 104. In some embodiments, a database 108 of cloud system 106 may store a dataset of data and metadata associated with local and/or network information related to a user(s) of the components of system 100 and/or each of the components of system 100 (e.g., UE, and the services and applications provided by cloud system 106 and/or content engine 200).

In some embodiments, for example, cloud system 106 can provide a private/proprietary management platform, whereby engine 200, discussed *infra,* corresponds to the novel functionality system 106 enables, hosts and provides to a network 104 and other devices/platforms operating thereon.

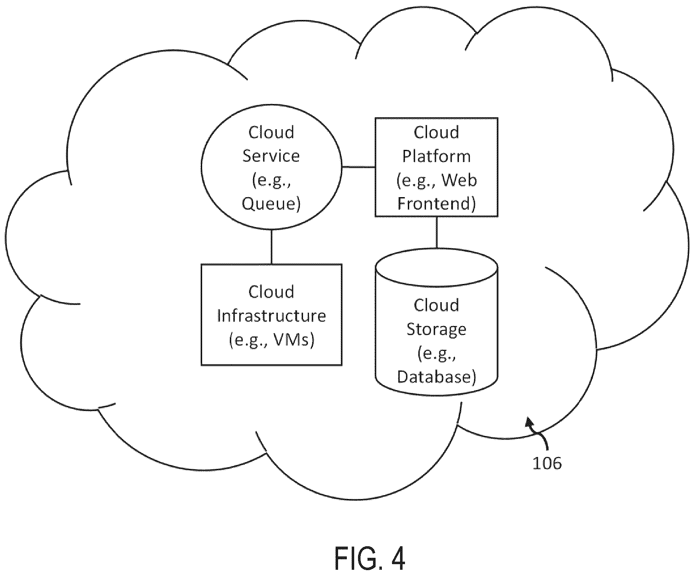

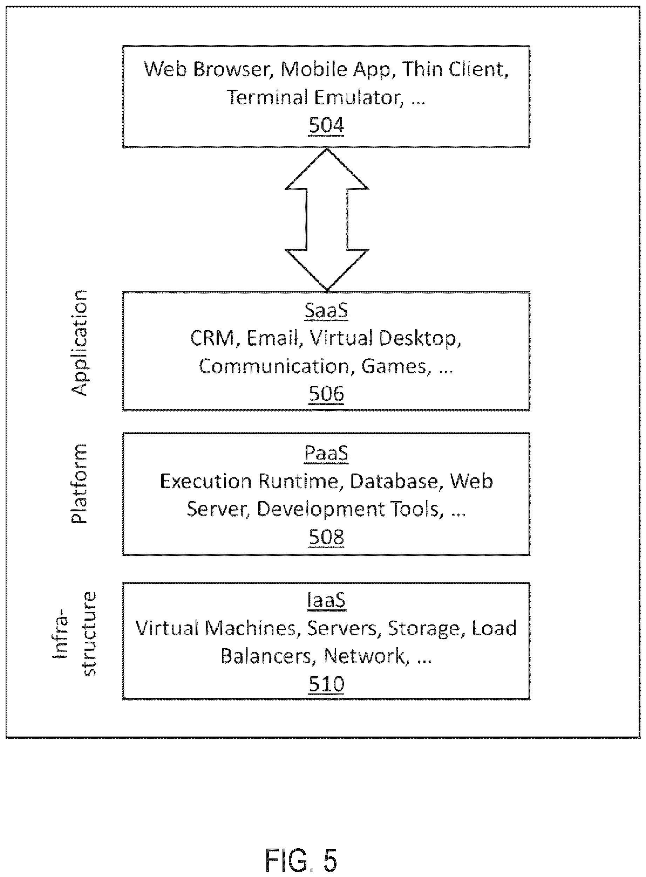

Turning to FIG. 4 and FIG. 5, in some embodiments, the exemplary computer-based systems/platforms, the exemplary computer-based devices, and/or the exemplary computer-based components of the present disclosure may be specifically configured to operate in a cloud computing/architecture 106 such as, but not limiting to: infrastructure as a service (IaaS) 510, platform as a service (PaaS) 508, and/or software as a service (SaaS) 506 using a web browser, mobile app, thin client, terminal emulator or other endpoint 504. FIG. 4 and FIG. 5 illustrate schematics of non-limiting implementations of the cloud computing/architecture(s) in which the exemplary computer-based systems for administrative customizations and control of network-hosted application program interfaces (APIs) of the present disclosure may be specifically configured to operate.

Turning back to FIG. 1, according to some embodiments, database 108 may correspond to a data storage for a platform (e.g., a network hosted platform, such as cloud system 106, as discussed *supra*) or a plurality of platforms. Database 108 may receive storage instructions/requests from, for example, engine 200 (and associated microservices), which may be in any type of known or to be known format, such as, for example, structured query language (SQL). According to some embodiments, database 108 may correspond to any type of known or to be known storage, for example, a memory or memory stack of a device, a distributed ledger of a distributed network (e.g., blockchain, for example), a look-up table (LUT), and/or any other type of secure data repository.

Content engine 200, as discussed above and further below in more detail, can include components for the disclosed functionality. According to some embodiments, content engine 200 may be a special purpose machine or processor, and can be hosted by a device on network 104, within cloud system 106, and/or on UE 102. In some embodiments, engine 200 may be hosted by a server and/or set of servers associated with cloud system 106.

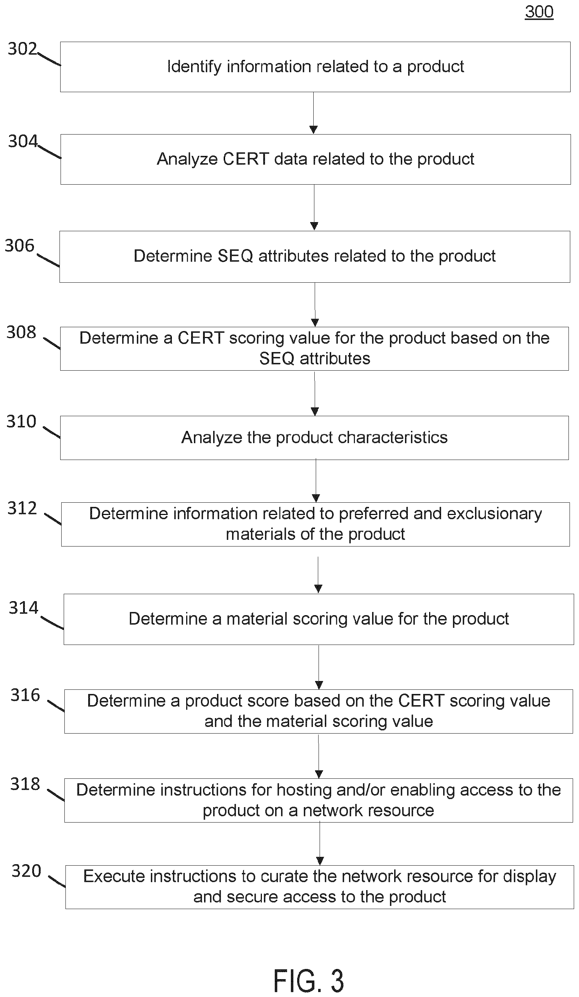

According to some embodiments, as discussed in more detail below, content engine 200 may be configured to implement and/or control a plurality of services and/or microservices, where each of the plurality of services/microservices are configured to execute a plurality of workflows associated with performing the disclosed content management. Non-limiting embodiments of such workflows are provided below in relation to at least FIG. 3.

According to some embodiments, as discussed above, content engine 200 may function as an application provided by cloud system 106. In some embodiments, engine 200 may function as an application installed on a server(s), network location and/or other type of network resource associated with system 106. In some embodiments, engine 200 may function as an application installed and/or executing on UE 102. In some embodiments, such application may be a web-based application accessed by UE 102 over network 104 from cloud system 106. In some embodiments, engine 200 may be configured and/or installed as an augmenting script, program or application (e.g., a plug-in or extension) to another application or program provided by cloud system 106 and/or executing on UE 102.

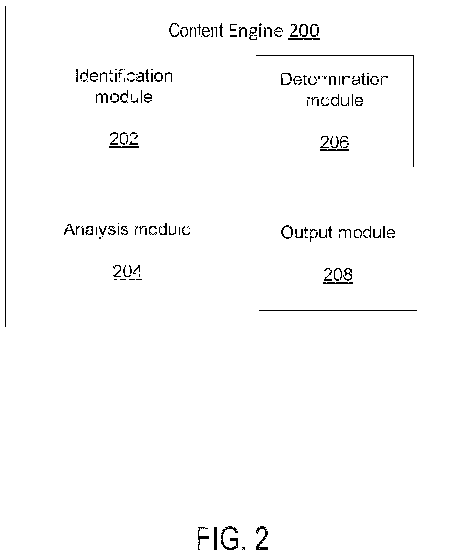

As illustrated in FIG. 2, according to some embodiments, content engine 200 includes identification module 202, analysis module 204, determination module 206 and output module 208. It should be understood that the engine(s) and modules discussed herein are non-exhaustive, as additional or fewer engines and/or modules (or sub-modules) may be applicable to the embodiments of the systems and methods discussed. More detail of the operations, configurations and functionalities of engine 200 and each of its modules, and their role within embodiments of the present disclosure will be discussed below.

Turning to FIG. 3, Process 300 provides non-limiting example embodiments for the disclosed content curation and management framework. As provided below, the disclosed framework's configuration and implementation can provide a computerized suite of online tools for managing content (e.g., information related to items (e.g., products and/or services)), and enabling the curation of real-time, dynamically determined and served information related thereto.

According to some embodiments, Step 302 of Process 300 can be performed by identification module 202 of content engine 200; Steps 304 and 310 can be performed by analysis module 204; Steps 306, 308, 312-316 can be performed by determination module 206; and Steps 318-320 can be performed by output module 208.

According to some embodiments, Process 300 begins with Step 302 where engine 200 can identify information (e.g., electronic and/or digital information) related to a product. It should be understood that while the discussion herein will refer to a product, it should not be construed as limiting, as any type of real-world and/or digital item can form the basis for the processing steps of Process 300 discussed herein without departing from the scope of the instant disclosure. Indeed, while a single product is being discussed, it should not be construed as limiting, as the processing steps discussed herein can be performed for any number of products, for a single and/or plurality of online marketplaces.

According to some embodiments, Step 302's identified information can include, but is not limited to, certifications, standards, accreditation, conformity assurance, validations, and the like (referred to as CERT data). In some embodiments, the identified information can also include data related to, but not be limited to, characteristics (or attributes, features or parameters) of the product, product type, product size, product shape, product materials, product provider (e.g., brand, manufacturer, materials supplier, and the like), product location, and the like, or some combination thereof.

According to some embodiments, the identified information can be, but not limited to, retrieved from a datastore and/or network location (e.g., searched, retrieved, collected, downloaded, mined, crawled, scraped, and the like), provided by a user and/or product provider, determined via analysis of product data, and the like or some combination thereof.

In some embodiments, CERT data can include, but not be limited to, social attributes, environmental attributes, governance attributes, origin attributes (e.g., where made and/or assembled) and/or quality attributes (SEQ attributes (also referred to as SEQ + GO attributes, used interchangeably in a non-limiting manner).

In some embodiments, for example, social attributes can include data related to, but not be limited to, health exposure, safety, animal welfare, toxics reduction (e.g., exposure), organic (e.g., personal health), working conditions, social equity / fairness, human rights, fair pay, reuse (e.g., landfill capacity), recycle (e.g., landfill capacity), reclaim (landfill capacity), and the like.

In some embodiments, for example, environmental attributes can include data related to, but not limited to, organic (e.g., soil health), soil health not related to organic, reuse (e.g., fewer resources / less energy), recycle (e.g., fewer resources / less energy), toxics reduction (e.g., environment), reclaim (e.g., fewer resources / less energy), water, energy, emissions, waste, circular economy / circularity, forest preservation/conservation (e.g., biodiversity, climate change, and the like), and the like.

In some embodiments, for example, governance attributes can include data related to, but not limited to, which programs the products are part of, which programs the products are compliance with, and the like, as well as what type of company structure is associated with the product provider, manufacturer, and the like (e.g., 501-C3, B-corporation, Employee-owned, and the like).

In some embodiments, for example, origin attributes can correspond to locations where the product was assembled, where the materials are sourced from, where the materials are made, where the product/materials were designed, and the like.

In some embodiments, quality attributes can include data related to, but not limited to, organic (e.g., soil health), soil health not related to organic, reuse (fewer resources / less energy), recycle (e.g., fewer resources / less energy), toxics reduction (environment), reclaim (e.g., fewer resources / less energy), water, energy, emissions, waste, circular economy / circularity, forest preservation/conservation (e.g., biodiversity, climate change, and the like), and the like.

Accordingly, as discussed below, engine 200 can evaluate the CERT/SEQ data for the product, focusing on the breadth and depth of the certification requirements, to ensure that the product is assessed against the highest standards, leading to increased confidence for both the industry and the consumers.

In Step 304, engine 200 can analyze the CERT data related to the product. According to some embodiments the CERT data analysis can consider and/or focus on quota requirements, supply chain involvement, percentage of compliance and/or CERT participation processes, or some combination thereof. Such considerations, as discussed herein, can be based on the CERT data and/or SEQ data, discussed *supra.*

In some embodiments, quota requirements can involve engine 200 determining whether specific quotas established by a certification body have been satisfied. In some embodiments supply chain involvement can involve engine 200 determining whether requirements for the actors along the supply chain for creating and/or offering for sale the product meet applicable standards. In some embodiments, percentage of compliance can involve engine 200 determining a proportion of the products and/or its materials that meet certification requirements. And, in some embodiments, CERT participation processes can involve engine 200 determining whether the applicable standards as provided by a certification body are being complied with (and/or whether the product adheres to and/or the actors manufacturing the product participate in such body/bodies).

Accordingly, in some embodiments, Step 304 can involve engine 200 analyzing the identified information from Step 302 (e.g., CERT data), which can involve engine 200 executing a specific trained AI/ML model, a particular machine learning model architecture, a particular machine learning model type (e.g., convolutional neural network (CNN), recurrent neural network (RNN), autoencoder, support vector machine (SVM), and the like), or any other suitable definition of a machine learning model or any suitable combination thereof.

In some embodiments, engine 200 may leverage an LLM, whether known or to be known. As discussed above, an LLM is a type of AI system designed to understand and generate human-like text based on the input it receives. The LLM can implement technology that involves deep learning, training data and natural language processing (NLP). Large language models are built using deep learning techniques, specifically using a type of neural network called a transformer. These networks have many layers and millions or even billions of parameters. LLMs can be trained on vast amounts of text data from the internet, books, articles, and other sources to learn grammar, facts, and reasoning abilities. The training data helps them understand context and language patterns. LLMs can use NLP techniques to process and understand text. This includes tasks like tokenization, part-of-speech tagging, and named entity recognition.

LLMs can include functionality related to, but not limited to, text generation, language translation, text summarization, question answering, conversational AI, text classification, language understanding, content generation, and the like. Accordingly, LLMs can generate, comprehend, analyze and output human-like outputs (e.g., text, speech, audio, video, and the like) based on a given input, prompt or context. Accordingly, LLMs, which can be characterized as transformer-based LLMs, involve deep learning architectures that utilizes self-attention mechanisms and massive-scale pre-training on input data to achieve NLP understanding and generation. Such current and to-be-developed models can aid AI systems in handling human language and human interactions therefrom.

In some embodiments, engine 200 may be configured to utilize one or more AI/ML techniques selected from, but not limited to, computer vision, feature vector analysis, decision trees, boosting, support-vector machines, neural networks, nearest neighbor algorithms, Naive Bayes, bagging, random forests, logistic regression, and the like.

In some embodiments and, optionally, in combination of any embodiment described above or below, a neural network technique may be one of, without limitation, feedforward neural network, radial basis function network, recurrent neural network, convolutional network (e.g., U-net) or other suitable network. In some embodiments and, optionally, in combination of any embodiment described above or below, an implementation of Neural Network may be executed as follows:
a. define Neural Network architecture/model,
b. transfer the input data to the neural network model,
c. train the model incrementally,
d. determine the accuracy for a specific number of timesteps,
e. apply the trained model to process the newly received input data,
f. optionally and in parallel, continue to train the trained model with a predetermined periodicity.

In some embodiments and, optionally, in combination of any embodiment described above or below, the trained neural network model may specify a neural network by at least a neural network topology, a series of activation functions, and connection weights. For example, the topology of a neural network may include a configuration of nodes of the neural network and connections between such nodes. In some embodiments and, optionally, in combination of any embodiment described above or below, the trained neural network model may also be specified to include other parameters, including but not limited to, bias values/functions and/or aggregation functions. For example, an activation function of a node may be a step function, sine function, continuous or piecewise linear function, sigmoid function, hyperbolic tangent function, or other type of mathematical function that represents a threshold at which the node is activated. In some embodiments and, optionally, in combination of any embodiment described above or below, the aggregation function may be a mathematical function that combines (e.g., sum, product, and the like) input signals to the node. In some embodiments and, optionally, in combination of any embodiment described above or below, an output of the aggregation function may be used as input to the activation function. In some embodiments and, optionally, in combination of any embodiment described above or below, the bias may be a constant value or function that may be used by the aggregation function and/or the activation function to make the node more or less likely to be activated.

According to some embodiments, the analysis, via the AI/ML techniques discussed herein can involve, but are not limited to, filtering a quality of the CERT data (e.g., where the quality can correlate the attributes of SEQ, discussed above and more below), such that a category and/or type of CERT can be determined for the data. Engine 200, in some embodiments, via AI/ML modelling techniques discussed *supra,* can determine raw score for the filtered CERT data (e.g., per product, per category, per CERT, per attribute, per manufacturer, per origin, and the like), which can be weighted and/or numerically represented by an integer. Such scores can be compared and scaled (e.g., to a predetermined range 1-100, for example). Thus, the scores can correspond to a product, its CERT data, and/or any portion thereof.

By way of non-limiting example, according to some embodiments, an item can be scored within its category (e.g., or type of product, for example), whereby a curved average calculation can be based on a minimum score in a category of items and a maximum score in the category of items. For example, as depicted in the below table:

**Table 1:**

| Items | | | | | | |
|---|---|---|---|---|---|---|
| Item 1 Raw Score | Item 2 Raw Score | Item 3 Raw Score | Item 4 Raw Score | Item 4 Raw Score | Min Item Score | Max Item Score |
| 44 | 21 | 5 | 8 | 15 | 5 | 44 |
| **Curved Average = (Min Score + Max Score) / 2** | | | | | | **24.5** |
| **Score = (Item Raw Score / Curved Average) x 50** | | | | | | |
| **90** | **43** | **10** | **16** | **31** | | |

As discussed herein, a raw score can be determined for a given item, which can be based on SEQ + GO information. For example, the raw score can be based on i) a number of preferred materials, ii) certifications and iii) warranties. It should be noted that the values, metrics and/or integers used for the scoring discussed herein are provided as non-limiting example embodiments, and should not be construed as limiting values/metrics/integers. For example, the preferred materials can trigger an item receiving a score of 1 for each of those materials, whereby certain preferred materials can be weighted, and/or a negative score can be attributed to certain materials.

In some embodiments, for certifications, the values can differ according to a range for each type of information for which a product/item can be judged/valued/quantified. For example, such value categories can be scored as follows:
1. Threshold Requirements (Scope)
   Scorable Options: i) Less than or equal to 25%: Score 1; ii) 26% to 74%: Score 2; iii) 75% to 99%: Score 3; iv) 100%: Score 4.
2. Audit Systems
   Scorable Options: i) Less than or equal to 25%: Score 1; ii) 26% to 74%: Score 2; iii) 75% to 99%: Score 3; iv) 100%: Score 4.
3. Product Impact:
   Scorable Options: i) Less than or equal to 25%: Score 1; ii) 26% to 74%: Score 2; iii) 75% to 99%: Score 3; iv) 100%: Score 4
4. Process Impact
   Scorable Options: i) Less than or equal to 25%: Score 1; ii) 26% to 74%: Score 2; iii) 75% to 99%: Score 3; iv) 100%: Score 4.
5. Chemicals Management
   Scorable Options: i) Less than or equal to 25%: Score 1; ii) 26% to 74%: Score 2; iii) 75% to 99%: Score 3; iv) 100%: Score 4.
6. Worker Health Safety (Impact)
   Scorable Options: i) Limited: Score 1; ii) Moderate: Score 2; iii) Extensive: Score 3.
7. Environmental Impact:
   Scorable Options: i) Limited: Score 1; ii) Moderate: Score 2; iii) Extensive: Score 3.
8. Social Impact
   Scorable Options: i) Less than or equal to 25%: Score 1; ii) 26% to 74%: Score 2; iii) 75% to 99%: Score 3; iv) 100%: Score 4.
9. Compliance
   Scorable Options: i) Baseline: Score 1; ii) Moderate: Score 2; iii) Best: Score 3.
10. Awareness
   Scorable Options: i) None: Score 0; ii) Low: Score 1; iii) Moderate: Score 2; iv) High: Score 3.

According to some embodiments, warranties can correspond to the type, term and protection afforded by the warranty, which can be determined via AI/ML (e.g., LLM/natural language processing (NLP)) of the warranty. For example, a 90 day warranty can be provided a score of 1, and a lifetime warranty can be scored a 10.

Thus, in Step 306, based on the analysis from Step 304, engine 200 can determine the SEQ attributes (or designations) and corresponding scoring values related to the product, as discussed above. According to some embodiments, the SEQ attributes (designations) can provide a comprehensive understanding of the requirements and benefits of the CERT data for the product. By way of a non-limiting set of examples, according to some embodiments, such designations can involve, but not be limited to, benefits of CERT (e.g., determine the advantages of obtaining the certification for both the product and an organization providing the product), product certification requirements (e.g., determine whether the product meets and/or achieves particular certifications based on the product information (e.g., type, materials, and the like)), audit requirements (e.g., audit scope, covering product and/or supply chain perspectives; audit rigor, by analyzing and determining the thoroughness of the compliance verification process; audit frequency, determining a regularity of audits based on certification standards and risk levels; auditor independence, ensuring auditors are qualified, competent and impartial; traceability and chain of custody, which corresponds to and/or can be based on the documentation, labeling and tracking of certified entities throughout the supply chain; and audit consequences, which can be the possible outcomes of an audit, such as granting, maintaining, suspending and/or withdrawing certification), measurable outcomes (e.g., determine the extent to which the certification process ensures tangible results for products) and manufacturing/production impact (e.g., determine the effects of certification requirements on manufacturing, harvesting and/or production processes), and the like, or some combination thereof.

According to some embodiments, the SEQ attributes (designations) can additionally provide information related to considerations of various aspects and/or impacts of the certification process. For example, the designations can include information related to, but not limited to, chemical management (e.g., assess the chemical aspects involved in the certification of the product), worker health and safety (e.g., assess the health and safety requirements for the manufacturing workers, as well as the workers of the hosting entities), environmental impacts (determine environmental implications of the certification process), social impact (e.g., determine and leverage social impact requirements associated with the certification), animal welfare (e.g., determine the animal welfare requirements, if applicable), and the like, or some combination thereof.

In some embodiments, the SEQ attributes (designations) can additionally provide information related to certification's industry recognition, reputation and value, which can correlate to, but not be limited to, industry and consumer recognition (e.g., determine and leverage the legitimacy of the certification among industry professionals and consumers), CERT ranking (e.g., evaluate the certification(s) of the product against others in the market for similar products), awareness, value and reputation (e.g., evaluate the overall recognition, perceived value, popularity and reputation of the certification among industry professionals and consumers), and the like, or some combination thereof. Indeed, as discussed above, such determinations can indicate a ranking, which as provided below, can impact how the product data is displayed within a page for consumption by a viewing user and/or rendering device.

According to some embodiments, such determinations, as provided above via the determination of the designations via the AI/ML and/or LLM techniques, can be stored in database 108 as a data structure and/or set of related data structures for a particular product and/or CERT.

Thus, as a result of the analysis in Step 304, engine 200, in Step 306, can determine, derive, extract or otherwise information related to the social attributes, environmental attributes and/or quality attributes of the CERT and/or product.

In Step 308, engine 200 can determine CERT information (e.g., a CERT scoring value) for the product. Such scoring value can be a computation of the CERT data and/or SEQ attribute data (e.g., designations), which can be input into any of the AI/ML and/or LLM models discussed above, which can product a ranked/rated scoring value that indicates a value of the CERT for the product. Such CERT scoring value can be stored in database 108, as discussed above. The CERT information can provide a status of the CERT/product, as per the scoring value, discussed herein.

In Step 310, engine 200 can then perform an analysis of the product characteristics. As discussed above, such characteristics can be identified as part of the product information identified in Step 302. In some embodiments, engine 200 can collect, retrieve, determine, extract or otherwise identify such product characteristics in Step 310 for performance of the analysis discussed herein. According to some embodiments, the analysis by engine 200 of the product characteristics can be performed via any of the AI/ML and/or LLM techniques discussed with reference to Step 304, *supra.*

In Step 312, based on the analysis performed in Step 310, engine 200 can determine information related to preferred and/or exclusionary materials of the product. According to some embodiments, preferred materials (PMs) can refer to environmentally friendly materials that constitute the product (e.g. which materials were used to make the product). In some embodiments, PMs can correspond to resources chosen for their alignment with sustainability, ethical manufacturing and responsible consumption. Such materials can minimize environmental impact, promote longevity and often include innovative or recovered substances, such as ocean plastics. PMs can resonate with conscious consumers, reflecting a commitment to the planet and societal well-being. In some embodiments, on the contrary, exclusionary materials (EMs, or "bad actor" chemicals) can correspond to, for example, toxic chemicals, such as pesticides, and the like, which can be harmful to users and/or the environment.

Thus, in Step 312, engine 200 can determine categories of the materials of the product as they relate to PMs and/or EMs. Such PM/EM data can be stored in database 108, as discussed above.

In Step 314, engine 200 can determine material information (e.g., a material scoring value) for the product based on the PM and/or EM data of the product (as determined in Step 312). According to some embodiments, engine 200 may use only the PM data, whereby the EM material data can be filtered out for purposes of determining a positive material scoring. In some embodiments, the EM data can be utilized to normalize the material scoring based on the PM data, such that a total accountability of the PM and EM data can be used to determine the material accountability of the product. The material information can provide a status of the materials of the product, as per the material scoring values, discussed herein.

According to some embodiments, such material scoring value can be determined via engine 200 executing any of the AI/ML and/or LLM techniques discussed above, whereby the PM and/or PM and EM data can serve as an input to the selected AI/ML and/or LLM model(s).

According to some embodiments, with reference to material scoring based on PM data, the identified PMs for the product that are captured/identified are then scored. Such scoring can be performed in a similar manner as discussed above. In some embodiments, a base PM can start at a predetermined number (e.g., a base score of 1). Thus, in some embodiments, other PMs can be scored in a hierarchy based on a circular economy perspective with additional emphasis on material innovations. In some embodiments, such scoring hierarchy emphasizes materials that use less energy and resources to produce while minimizing environmental and social impacts of production. The more "green" the material, the higher the material scoring.

According to some embodiments, key principles of the scoring hierarchy can include, but are not limited to: reduction of unsustainable resources (e.g., utilizing materials that minimize the use of virgin and unsustainable resources, thereby preserving the natural environment), energy efficiency (e.g., emphasizing the reduction of energy in production, leading to a lower carbon footprint), environmental protection (e.g., minimizing emissions, chemicals and the loss of biodiversity from harvesting material inputs), longevity (e.g., focusing on the durability and lifespan of products to reduce waste), connection to nature and/or people (e.g., creating products that foster a connection to nature and the human touch in manufacturing), innovation and recovery (e.g., rewarding brands that use innovative and recovered materials, such as sneakers made from ocean plastics), and the like or some combination thereof.

According to some embodiments, the above scoring hierarchy can be implemented via the AI/ML and/or LLM models, as a basis for performing their computational scoring analysis. In some embodiments, the scoring hierarchy can be applied to EM data, such that the EM data can be scored, tallied and/or quantified for purposes of determining a comprehensive material understanding of the product (e.g., some materials are PMs, while some materials of the product are not, and how does the EMs of the product offset the sustainability of the product, for example).

In some embodiments, the material scoring for the PMs/EMs can be per material, and/or can be aggregated into a material scoring for the product. Accordingly, in some embodiments, such scoring information can be stored in database 108, as discussed above.

In Step 316, engine 200 can determine a product status (or score) for the product, which can be based on the CERT information / score value (from Step 308) and the material information / scoring value (from Step 314). Such product status/score determination can be performed via execution of any of the AI/ML and/or LLM models discussed above, in a similar manner at least discussed in relation to Steps 304, 308 and/or 316. Such determined product status/score can be stored in database 108, as discussed above. The product status can provide an indicator as to the quality of the product, quality of the materials of the product and/or quality of the CERT of the product, and the like.

In some embodiments, warranty information (as identifiable from the information identified from Step 302, discussed *supra*) can form a part of the product score determination. The warranty information and/or values/metrics can serve as a weighting factor, in that products that have warranties, dependent on types of warranties and/or the length of such warranties, can cause product scores to increase and/or decrease (e.g., a longer warranty can have a direct correlation with an increased product score).

In Step 318, based on the determined product score for the product, engine 200 can determine instructions for hosting and/or enabling access to the product on a network resource (e.g., web page or application, for example). In some embodiments, the value of the product score can cause an increased visibility of a product on a resource (e.g., increased SEO, for example). In some embodiments, the values of the CERT data from the CERT scoring value and/or the material scoring of the PM and/or EM data can cause additional data and/or warnings to be displayed upon display of the product information on a network resource. For example, if the product score indicates that the CERT data is deficient, then when the product is displayed, the GUI of the resource can be modified to provide a display and/or warning to an interacting user that alerts them to such deficiency. In another non-limiting example, if the material scoring is at or below a threshold (e.g., the product contains materials that are toxic at or below a threshold level), the GUI may prevent the purchase of the product without the user selecting a set of interactive options that confirm the user's understanding of the potential harmfulness of the product. Such instructions, as above, can be stored in database 108.

And, in Step 320, engine 200 can execute the instructions to curate the network resource for display and secure access of the product. Such curation can involve, as mentioned above, modifying the GUI of the page, for example. Indeed, as discussed herein, the curation can cause execution of the compiled instructions that automatically manipulate read and write access to the electronic information of the product.

Accordingly, as discussed above, the displayed information, which discussed *supra* can be dynamically updated based on updates to the information compiled via the steps of Process 300, can include information related to, but not limited to, name of material, category, preferable (e.g., Yes or No, for example, or a rating system (e.g., 1-100 scoring), for example, and the like), and pros, cons, and the like).

Thus, as evidenced from the above mentioned executed processing steps, the disclosed framework's capabilities and functionality provide a novel paradigm for online commerce (e.g., e-commerce) activities through the promotion of responsible and sustainable consumption via a curated marketplace, which can impact how the items are displayed, as well as their availability to certain users/markets.

FIG. 6 is a schematic diagram illustrating a client device showing an example embodiment of a client device that may be used within the present disclosure. Client device 600 may include many more or less components than those shown in FIG. 6. However, the components shown are sufficient to disclose an illustrative embodiment for implementing the present disclosure. Client device 600 may represent, for example, UE 102 discussed above at least in relation to FIG. 1.

As shown in the figure, in some embodiments, Client device 600 includes a processing unit (CPU) 622 in communication with a mass memory 630 via a bus 624. Client device 600 also includes a power supply 626, one or more network interfaces 650, an audio interface 652, a display 654, a keypad 656, an illuminator 658, an input/output interface 660, a haptic interface 662, an optional global positioning systems (GPS) receiver 664 and a camera(s) or other optical, thermal or electromagnetic sensors 666. Device 600 can include one camera/sensor 666, or a plurality of cameras/sensors 666, as understood by those of skill in the art. Power supply 626 provides power to Client device 600.

Client device 600 may optionally communicate with a base station (not shown), or directly with another computing device. In some embodiments, network interface 650 is sometimes known as a transceiver, transceiving device, or network interface card (NIC).

Audio interface 652 is arranged to produce and receive audio signals such as the sound of a human voice in some embodiments. Display 654 may be a liquid crystal display (LCD), gas plasma, light emitting diode (LED), or any other type of display used with a computing device. Display 654 may also include a touch sensitive screen arranged to receive input from an object such as a stylus or a digit from a human hand.

Keypad 656 may include any input device arranged to receive input from a user. Illuminator 658 may provide a status indication and/or provide light.

Client device 600 also includes input/output interface 660 for communicating with external. Input/output interface 660 can utilize one or more communication technologies, such as USB, infrared, Bluetooth^{™}, or the like in some embodiments. Haptic interface 662 is arranged to provide tactile feedback to a user of the client device.

Optional GPS transceiver 664 can determine the physical coordinates of Client device 600 on the surface of the Earth, which typically outputs a location as latitude and longitude values. GPS transceiver 664 can also employ other geo-positioning mechanisms, including, but not limited to, triangulation, assisted GPS (AGPS), E-OTD, CI, SAI, ETA, BSS or the like, to further determine the physical location of client device 600 on the surface of the Earth. In one embodiment, however, Client device 600 may through other components, provide other information that may be employed to determine a physical location of the device, including for example, a MAC address, Internet Protocol (IP) address, or the like.

Mass memory 630 includes a RAM 632, a ROM 634, and other storage means. Mass memory 630 illustrates another example of computer storage media for storage of information such as computer readable instructions, data structures, program modules or other data. Mass memory 630 stores a basic input/output system ("BIOS") 640 for controlling low-level operation of Client device 600. The mass memory also stores an operating system 641 for controlling the operation of Client device 600.

Memory 630 further includes one or more data stores, which can be utilized by Client device 600 to store, among other things, applications 642 and/or other information or data. For example, data stores may be employed to store information that describes various capabilities of Client device 600. The information may then be provided to another device based on any of a variety of events, including being sent as part of a header (e.g., index file of the HLS stream) during a communication, sent upon request, or the like. At least a portion of the capability information may also be stored on a disk drive or other storage medium (not shown) within Client device 600.

Applications 642 may include computer executable instructions which, when executed by Client device 600, transmit, receive, and/or otherwise process audio, video, images, and enable telecommunication with a server and/or another user of another client device. Applications 642 may further include a client that is configured to send, to receive, and/or to otherwise process gaming, goods/services and/or other forms of data, messages and content hosted and provided by the platform associated with engine 200 and its affiliates.

As used herein, the terms "computer engine" and "engine" identify at least one software component and/or a combination of at least one software component and at least one hardware component which are designed/programmed/configured to manage/control other software and/or hardware components (such as the libraries, software development kits (SDKs), objects, and the like).

Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. In some embodiments, the one or more processors may be implemented as a Complex Instruction Set Computer (CISC) or Reduced Instruction Set Computer (RISC) processors; x86 instruction set compatible processors, multi-core, or any other microprocessor or central processing unit (CPU). In various implementations, the one or more processors may be dual-core processor(s), dual-core mobile processor(s), and so forth.

Computer-related systems, computer systems, and systems, as used herein, include any combination of hardware and software. Examples of software may include software components, programs, applications, operating system software, middleware, firmware, software modules, routines, subroutines, functions, methods, procedures, software interfaces, API, instruction sets, computer code, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

For the purposes of this disclosure a module is a software, hardware, or firmware (or combinations thereof) system, process or functionality, or component thereof, that performs or facilitates the processes, features, and/or functions described herein (with or without human interaction or augmentation). A module can include sub-modules. Software components of a module may be stored on a computer readable medium for execution by a processor. Modules may be integral to one or more servers, or be loaded and executed by one or more servers. One or more modules may be grouped into an engine or an application.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores," may be stored on a tangible, machine readable medium and supplied to various customers or manufacturing facilities to load into the fabrication machines that make the logic or processor. Of note, various embodiments described herein may, of course, be implemented using any appropriate hardware and/or computing software languages (e.g., C++, Objective-C, Swift, Java, JavaScript, Python, Perl, QT, and the like).

For example, exemplary software specifically programmed in accordance with one or more principles of the present disclosure may be downloadable from a network, for example, a website, as a stand-alone product or as an add-in package for installation in an existing software application. For example, exemplary software specifically programmed in accordance with one or more principles of the present disclosure may also be available as a client-server software application, or as a web-enabled software application. For example, exemplary software specifically programmed in accordance with one or more principles of the present disclosure may also be embodied as a software package installed on a hardware device.

For the purposes of this disclosure the term "user", "subscriber" "consumer" or "customer" should be understood to refer to a user of an application or applications as described herein and/or a consumer of data supplied by a data provider. By way of example, and not limitation, the term "user" or "subscriber" can refer to a person who receives data provided by the data or service provider over the Internet in a browser session, or can refer to an automated software application which receives the data and stores or processes the data. Those skilled in the art will recognize that the methods and systems of the present disclosure may be implemented in many manners and as such are not to be limited by the foregoing exemplary embodiments and examples. In other words, functional elements being performed by single or multiple components, in various combinations of hardware and software or firmware, and individual functions, may be distributed among software applications at either the client level or server level or both. In this regard, any number of the features of the different embodiments described herein may be combined into single or multiple embodiments, and alternate embodiments having fewer than, or more than, all of the features described herein are possible.

Functionality may also be, in whole or in part, distributed among multiple components, in manners now known or to become known. Thus, myriad software/hardware/firmware combinations are possible in achieving the functions, features, interfaces and preferences described herein. Moreover, the scope of the present disclosure covers conventionally known manners for carrying out the described features and functions and interfaces, as well as those variations and modifications that may be made to the hardware or software or firmware components described herein as would be understood by those skilled in the art now and hereafter.

Furthermore, the embodiments of methods presented and described as flowcharts in this disclosure are provided by way of example in order to provide a more complete understanding of the technology. The disclosed methods are not limited to the operations and logical flow presented herein. Alternative embodiments are contemplated in which the order of the various operations is altered and in which sub-operations described as being part of a larger operation are performed independently.

While various embodiments have been described for purposes of this disclosure, such embodiments should not be deemed to limit the teaching of this disclosure to those embodiments. Various changes and modifications may be made to the elements and operations described above to obtain a result that remains within the scope of the systems and processes described in this disclosure.

## Claims

1. A method comprising:
identifying, by a device, electronic information related to an item, the information comprising certification (CERT) data and material data related to the item;
analyzing, via the device executing an artificial intelligence (AI) model, the electronic information;
determining, by the device, based on the AI analysis of the CERT data, CERT information for the item, CERT information indicating a status of at least one certification related to a manufacture of the item;
determining, by the device, based on the AI analysis of the material data, material information for the item, the material information indicating a status of a type of at least one material constituting the item;
determining, by the device, an item status for the item based on AI analysis of the CERT information and the material information; and
dynamically curating, by the device over a network, display of the item on a network resource based on the item status, the curation of the display comprising execution of compiled instructions that automatically manipulate read and write access to the electronic information of the item.

2. The method of claim 1, further comprising:
determining, based on the material data, a type of the materials of the item, the type of the materials corresponding to at least one of a preferred material (PM) and exclusionary material (EM), wherein the material information determination is based on the type of materials of the item.

3. The method of claim 2, further comprising:
determining a hierarchical score for the item, the hierarchical score being based on a determined base score for a type of PM material, wherein the hierarchical score increases based on the type of PM material as it relates to at least one of sustainability, ethical manufacturing and responsible consumption.

4. The method of claim 3, wherein the hierarchical score is further based on a type of the EM material.

5. The method of any one of the preceding claims, further comprising:
compiling the electronic instructions based on the item status, the electronic instructions comprising controls for how the display of the item is curated, the controls comprising modifications to the display of the item that impact how the electronic information is presented on the network resource.

6. The method of any one of the preceding claims, wherein the CERT data comprises information related to certifications, standards, accreditation, conformity assurance and validations of the item, wherein the CERT data further comprises social attributes, environmental attributes, governance attributes, origin attributes and quality attributes (SEQ attributes) of the item, wherein the CERT information is based at least on the SEQ data, wherein the SEQ data is identified via analysis of the CERT data via the AI model.

7. The method of any one of the preceding claims, wherein the CERT information, material information and item status comprise scoring values.

8. The method of any one of the preceding claims, wherein the electronic information further comprises item data related to at least one of characteristics of the item, item type, item size, item shape, item materials, item provider and item location.

9. The method of any one of the preceding claims, wherein the network resource is a webpage associated with a third party provider.

10. The method of any one of the preceding claims, wherein the item is a real-world or digital item provided by a third party entity.

11. A device comprising:
a processor configured to:
identify electronic information related to an item, the information comprising certification (CERT) data and material data related to the item;
analyze, via an artificial intelligence (AI) model, the electronic information;
determine, based on the AI analysis of the CERT data, CERT information for the item, CERT information indicating a status of at least one certification related to a manufacture of the item;
determine, based on the AI analysis of the material data, material information for the item, the material information indicating a status of a type of at least one material constituting the item;
determine an item status for the item based on AI analysis of the CERT information and the material information; and
dynamically curate, over a network, display of the item on a network resource based on the item status, the curation of the display comprising execution of compiled instructions that automatically manipulate read and write access to the electronic information of the item.

12. The device of claim 11, wherein the processor is further configured to:
determine, based on the material data, a type of the materials of the item, the type of the materials corresponding to at least one of a preferred material (PM) and exclusionary material (EM), wherein the material information determination is based on the type of materials of the item.

13. The device of claim 12, wherein the processor is further configured to:
determine a hierarchical score for the item, the hierarchical score being based on a determined base score for a type of PM material, wherein the hierarchical score increases based on the type of PM material as it relates to at least one of sustainability, ethical manufacturing and responsible consumption.

14. The device of claim 13, wherein the hierarchical score is further based on a type of the EM material.

15. The device of any one of claims 11 to 14, wherein the processor is further configured to:
compile the electronic instructions based on the item status, the electronic instructions comprising controls for how the display of the item is curated, the controls comprising modifications to the display of the item that impact how the electronic information is presented on the network resource.
